# EUROPEAN PATENT APPLICATION

(11) **EP 1 944 539 A1**
(43) Date of publication of application: **16.07.2008**
(21) Application number: 06757983.9
(22) Date of filing: 07.06.2006
(51) Int. Cl.: F17C 11/00

(54) **HYDROGEN STORAGE CONTAINER**

(30) Priority: 08.07.2005 RU 2005121466
(71) Applicant: Chabak, Aleksandr Fedorovich, Moscow, 123585 (RU)
(72) Inventor: Chabak, Aleksandr Fedorovich, Moscow, 123585 (RU)
(74) Representative: Baronetzky, Klaus
(86) International application number: PCT/RU2006/000294
(87) International publication number: WO 2007/008105

(57) **Abstract**

A container for storage of hydrogen consists of hermetic casing, technological branch pipes, heating and refilling-accumulating elements, placed in the casing is provided, so that the refilling-accumulating element is made of porous material and a part of its outer surface, that is connected by pipes for supplying and extracting the hydrogen, is covered by a material with a high degree of permeability for hydrogen, or with low temperature of fusion, or with low temperature of destruction, and the rest of the outer surface is covered by a material with a low degree of permeability for hydrogen and heating element is placed on the same level with that.

## Description

### Previous technical solutions

There exist devices for accumulation of hydrogen, based on the linkage of hydrogen in solid materials, (i.e. in hydride of metal or concentration on a surface of disperse nano-materials) (Patents of the Russian Federation NN 2037737, 2038525 MPK F17 C 5/04), such devices for accumulation and storage of hydrogen are the most explosion-safe, for the hydrogen is not put under excessive pressure, but they are inertial and require a certain period (about several minutes) to be prepared for work, the absorption and allocation of hydrogen produce a significant thermal effect. Moreover, the weight ratio - of the weight of hydrogen, stored in the device, to the weight of the device itself - 4,5% - is very low. This weight ratio depends both on volume of hydrogen, and on the relative density of the material used for accumulation.

There exists a hydrogen storage container (RU-Patent N 2222749 MPK F17 C 5/04) made as a hermetic casing with an internal vessel for liquid hydrogen in it, constructed in such a way, that permits to minimize losses of hydrogen and shorten the time for refilling. This container for a hydrogen car (G.Shvatz Future car, 2004) is made of resistant, relatively light composite materials. The last modification of this device with cylinders under pressure has the volume of 90 liters and the pressure 400 atm. The estimates show, that in this case there can be stored 3,2 kg of hydrogen, so the weight ratio is 3,2/40x100% = 8%. The disadvantages of this device are an explosion hazard and a low

It is known, that hydrogen can be stored in hollow fibers-capillaries made of glass (Yan, Sellers etc., 1985). Hollow capillaries 15 cm long, with diameter 160-260 microns and the walls 16-35 microns were sealed on both sides. Then they were placed to a chamber with pressure 700 atm. and temperature 300°C in it and the capillaries were filled with hydrogen. After cooling the hydrogen stayed within and came out after heating. Such a construction is explosion-safe but the weight ratio of hydrogen is 4,2%. This ratio is very low for using such a device as a base for industrial storage of hydrogen. Moreover refilling and extraction of hydrogen from it is possible under temperature 300°C and higher. The processes of refilling and extraction of hydrogen is slow, demanding several hours, given that requirements for refilling were set at 4-10 minutes.

There exists a container for accumulation and storage of hydrogen as a combination of a hermetic cover, technological branch pipes, internal surface for heat exchange and the refilling-accumulating element, that consists of powder of intermetallid (Patent of the Russian Federation N 2037737, 2037737 MPK F17 C 5/04 -prototype). The disadvantage of this device is a significant thermal effect in the moments of absorption and extraction of the gas and a very low weight ratio of hydrogen - 4,5%.

### Disclosure of the invention

The technical result, aimed by this invention, is to create a container for safe storage of hydrogen and this is provided by eliminating pressure in the device and making the processes of refilling and extraction possible under lower temperatures - up to 250°C, at the same time the weight ratio of hydrogen is more than 6% and the period of refilling is less than 10 minutes. Such a result is achieved by constructing a container, that consists of hermetic casing, technological branch pipes, heating and refilling-accumulating elements, placed in the casing, so that the refilling-accumulating element is made of porous material and a part of its outer surface, that is connected by pipes for supplying and extracting the hydrogen, is covered by a material with a high degree of permeability for hydrogen, or with low temperature of fusion, or with low temperature of destruction, and the rest of the outer surface is covered by a material with a low degree of permeability for hydrogen and heating element is placed on the same level with that. The layer with high degree of permeability for hydrogen can be made of palladium or nickel alloys or polymer materials. The layer with a low temperature of fusion can be made of the Wood alloy, or the Devard alloy, or bismuth alloy, tin alloy, lead alloy, or polymer materials. The layer with a low temperature of destruction can be made of polymer materials or organometallic materials. The porous material is the foamed nickel, or the foamed aluminum, or the foamed polymer material, or the foamed silicate. The porous material can be also constructed of nanopipes. The layer with a low degree of permeability for hydrogen can be made of such metals as steel or copper, or their alloys, or ceramics, or glass. The refilling-accumulating element is made of separate hermetic sections, that are individually connected to respective heating elements. This technical result may be achieved by making a container for the storage of hydrogen, that consists of hermetic casing, technological branch pipes, heating and refilling-accumulating elements, placed in the casing, and the heating and refilling-accumulating elements are constructed in the form of a bunch of hollow capillaries with its ends sealed with a material with a high degree of permeability for hydrogen, or with low temperature of fusion, or with low temperature of destruction, so that the ends of that capillaries are connected with pipes for supplying and extracting the hydrogen, and the heating element is placed on the same level with this layer. The layer with high degree of permeability for hydrogen, or with a low temperature of fusion, or with low temperature of destruction can be placed on one end of the bunch and another end can be hermetically sealed.

The layer with high degree of permeability for hydrogen can be made of palladium or nickel alloys or polymer materials. The layer with low temperature of fusion can be made of the Wood alloy, or the Devard alloy, or bismuth alloy, tin alloy, lead alloy, or polymer materials. The layer with low temperature of destruction can be made of polymer materials or organometallic materials. The capillaries can be made of glass, or carbon, or metal, or polymer materials. The refilling-accumulating element of hydrogen is made in the form of a bunch of capillaries or a single capillary winded on the core element. The outer surface of the bunch of capillaries or the single capillary can be covered by a metal with a low degree of permeability for hydrogen. The refilling-accumulating element of hydrogen is made of capillaries of different diameter and the diameter of the external capillaries is less than that of the internal ones. The capillaries can be inter-connected. The refilling-accumulating element of hydrogen is made of separate hermetic sections, that are individually connected to respective heating elements. The proposed engineering solutions for the containers for safe storage of hydrogen have the common purpose, providing the same result, given that in one case the refilling-accumulating element is a porous material and in another case it is a system of capillaries, and the accumulating element is connected to the pipes for supplying and extracting the hydrogen, and the regulation of supplying and extracting is assured by a layer of a certain material with specifically chosen parameters. The casing of the device is not under pressure, the possibility of decompression and the leakage of hydrogen is minimal, given that there are several barriers, preventing it from escaping. Short description of drawing parts Part 1 represents the general view of the container for storage of hydrogen in the modification of the refilling-accumulating element made of a porous material, where 1 is casing, 2 - pipes for supplying and extracting the hydrogen, 3 - heating element, 4 - refilling-accumulating element, 5 - layer with a low degree of permeability for hydrogen, 6 - porous material, 7- layer, that regulates supplying and extracting of hydrogen to accumulating element, 8 - branch pipes for supplying and extracting of hydrogen. Part 2 represents a fragment of the container in case the accumulating element 4 is made in the form of separate hermetic sections, producing the accumulating element from a porous material 6 and also from capillaries 10. Part 3 represents the general view of the container for storage of hydrogen in case the accumulating element 4 is made of bunch of capillaries 9 with the layer 7, covering both the ends of this bunch and capable to regulate supplying and extracting the hydrogen to the accumulating element 4.

Part 4 represents the general view of the container for storage of hydrogen in case the accumulating element 4 is made bunch of capillaries 9 with the layer 7, responsible for regulating supply and extraction of the hydrogen to the accumulating element, covering only one end and another end of each capillary 10 is sealed. Part 5 shows a separate hermetically sealed section, made of capillaries 10 of different diameters that are inter-connected round the core 11. The container for storage of hydrogen can be constructed in the form of a cylinder (part 1) in hermetic casing 1, where refilling-accumulating element for hydrogen 4 is placed and in the upper part of the casing 1 the pipes for supplying and extracting of hydrogen 2 are situated and connected with a branch pipe for supplying and extracting 8 the hydrogen to the consumer. The surface of the accumulating element, turned to the pipes structure 2, is covered by a layer responsible for regulating supply and extraction of the hydrogen to the accumulating element 4. In parallel to this layer is situated the heating element 3. It can be placed both ways - outside and inside the pipes structure 2. How it works. The hydrogen under excessive pressure is supplied to the pipes structure for supplying and extracting of hydrogen 2 through the branch pipe 8. In case the layer 7, responsible for regulating supply and extraction of the hydrogen to the accumulating element 4 is made of material with a high degree of permeability for hydrogen under given working temperatures 100-250°C, the heating element 3 is switched on, the layer 7 is being heated, the hydrogen goes out through it filling the refilling-accumulating element 4, that is constructed of a porous material 6 or a bunch of hollow capillaries 9. The layer with a high degree of permeability for hydrogen can be made of palladium or nickel alloys or polymer materials, i.e. aromatic polyamides. The permeability ratio for hydrogen for such materials under working temperatures used for refilling the container 100-250°C is up to (2,0 - 3,6) 10-4 cm2/ (c.at1/2). If the accumulating element 4 is made of a porous material i.e. the foamed nickel, or the foamed aluminum, or the foamed polymer material, or the foamed silicate, or carbonaceous nanopipes, in this case all the surface, that is not connected to pipes structure 2 and not covered by the layer 7 must be hermetically sealed with a layer with high degree of permeability for hydrogen under working temperatures 5. This layer can be made of such metals as steel or copper, or their alloys, or ceramics, or glass. The permeability ratio for hydrogen equals in case of glass up to 10-16 cm2/ (c.at1 /2), in case of chrome nickel steel is up to 10-18 cm2/ (c.at1/2). Given such conditions, the hydrogen fills under working pressure all the capacity of the container and the casing of it is free of pressure.

If the accumulating element 4 is made of hallow capillaries the hydrogen fills their inner capacity 10 (parts 3 and 4) through open ends of capillaries that are connected to the pipes structure. In this case the layer 7 covers the ends of capillaries. If the accumulating element 4 is made of separate hermetic sections (part 2), then the end of each section, turned to the pipes structure 2, is covered by the layer 7 that should regulate supplying and extracting the hydrogen. In parallel to this layer is situated the heating element 3, separately for each section. After finishing the process of refill the heater 3 is switched off, the layer 7 cools down and blocks the hydrogen in the accumulating element 4. The pressure in the pipes structure 2 goes down. In order to extract the hydrogen from the accumulating element 4 the heater 3 is switched on, its temperature and consequently that of the layer 7 are regulated and the pressure of the hydrogen in the pipes structure 2 responsible for supply and extraction is adjusted. There are other options for manipulating the layer high degree of permeability for hydrogen 7, instead of changing temperature there may be used ultrasound, high-frequency emissions, electric potential and other factors. If the layer 7, used to regulate supplying and extracting the hydrogen, is made of a material with a low temperature of fusion the process of filling the container is carried out in the following way. The layer with a low temperature of fusion 7 may be constructed of the Wood alloy, or the Devard alloy, or bismuth alloy, tin alloy, lead alloy, or polymer materials (their temperature of fusion are between 40 - 250°C) that are placed in granulated form on the surface of the accumulating element 4 turned to the pipes structure 2. The hydrogen under excessive pressure is canalized to the pipes structure 2 responsible for supply and extraction. When the needed excessive pressure is achieved and it is passed to the porous material or capillary structure, the heater 3 is switched on, the granules are fused and their material covers of the accumulating element 4 turned to the pipes structure. Later on the heater 3 is switched off, the fusible material cools down and seal hermetically the porous material 6 or capillary structure 10. The pressure in the pipes structure goes down. The container is filled with hydrogen. In this situation the casing is free of pressure and the process of refilling is carried out under the temperature 40 - 250°C. In order to extract the hydrogen from container the heater 3 is switched on, the fusible material melts down and is being displaced from upper part of the porous material 6 or capillary structure 10 by the excessive pressure of the hydrogen. The hydrogen goes to the pipes structure 2 and through the branch pipe 8 to the consumer. The smooth adjustment of pressure out of refilling-accumulating element for hydrogen 4 can be achieved by constructing this part of the device of separate hermetic sections connected individually to respective heaters. If the layer 7, used to regulate supplying and extracting the hydrogen, is made of a material with a low temperature of destruction, i.e. carbocyclical materials like C10H12 of naphthalene group (temperature of fusion 80,3°C, temperature of boiling 218°C), polyethylene, that becomes elastic under temperature approximately 80-200°C, they are also placed in form of granules on the surface accumulating element 4 turned to the pipes structure 2.

The pressure in the pipes structure 2 grows high and the hydrogen saturates the porous material 6 or capillary structure 10. The heater 3 makes the temperature of the layer 7 higher and it becomes elastic, sealing hermetically the porous material 6 or capillary structure 10. In order to extract the hydrogen from the refilling-accumulating element 4 the material is heated with higher temperature (for naphthalene group materials the temperature of boiling 218°C, for organometallic substances i.e. carbonyl alloys of chromium, molybdenum, tungsten that temperature is respectively 147, 156 and 175°C) and as a result of it they are either destroyed, vaporized or turn into viscous or liquid forms. Under high pressure of the hydrogen stored in the accumulating element 4 the hermetic seal is broken and the hydrogen goes to the 2 and through branch pipe 8 to the consumer. The smooth adjustment of pressure in the pipes structure can be achieved by constructing the accumulating element of separate sections connected individually to respective heaters. The polymerization and destruction of the polymers or organometallic substances can be produced not only by changing temperatures, but also by electric impulses or various emissions, i.e. ultraviolet. A of bunch hollow capillaries can be made of glass, or carbon, or metal, or polymer materials like polythenetereftalat, aromatic polyamides. The refilling-accumulating element of hydrogen 4 can be made in the form of a bunch of capillaries 9 or a single capillary winded on the core element. In order to assure better insulation of the accumulating element 4 the outer surface of the bunch of capillaries or the single capillary, made of glass, or carbon, or metal, or polymer materials, can be covered with a metallic layer 5 with a low degree of permeability for hydrogen under working temperatures. The same kind o layer 5 is placed on a separate section of the accumulating element 4 made in the form of a bunch of capillaries (part 2). The part 5 shows such a section made of hollow capillaries 10 of different diameters and inter-connected along the core 11. The capillaries can be stuck together with a glue (if they are made of polymers) or coupled by diffusion welding (if they are metallic). If capillaries of smaller diameters are placed on the outer part of the accumulating element (or separate section), the pressure on the wall of capillaries is getting less, that means that the high presser on the outer walls is being eliminated and the container becomes safer. The best variant for engineering the invention Let's show the possibilities to materialize the invention. Actually there exists production of bunches consisting of 120 hollow capillaries made of glass (length o each capillary is 20000 meters, the outer diameter 11 mk., the inner diameter 5 mk.). The bunch of capillaries is winded on the core element. The weight of the bunch is 380 grams. The inner volume of capillaries is 47,1 ml. The limit of glass for resisting stretching is 20000 atm. given the inner pressure in capillaries of 1000 atm. The volume of hydrogen in that capillary structure is 47,1 I or 4,2 grams. The weight ratio of hydrogen in capillaries 4,2:3,8x100%=1,1 %. Under pressure that is 2 times less than the limit of resistance of that structure - 10000 atm. - the weight ratio of hydrogen will be 11 %. For similar bunches consisting of capillaries with the outer diameter 110 mk., the inner diameter 100 mk. the weight of the whole structure equals 82,4 grams, the volume of hydrogen at 1000 atm. in it is 17 grams, that is the weight ratio of 8,5%. Respectively at 2000 atm. it will be 34%. So a high weight ratio is achieved.

### Example 1.

There is a bunch of capillaries (1000 pieces), total length of 100 m., the outer diameter 110 mk., the inner diameter 100 mk. with their ends sealed hermetically with an alloy that has a high degree of permeability for hydrogen (alloy of palladium and silver). The weight of the capillary structure equals 421 milligrams. The ends of capillaries were placed into a pipe structure for supplying and extracting hydrogen, they were heated up to 150°C and there was a pressure of 500 atm. created inside the capillaries. Then the bunch of capillaries under the same pressure was cooled down to the room temperature and weighted. The weight of the bunch of capillaries with hydrogen was 456 milligrams. So the weight of hydrogen in it was 35 milligrams, corresponding to the weight ratio of 8,3%. It took 20-30 minutes to fill it with hydrogen.

### Example 2.

A small piece of a porous material - the foamed nickel, weight 2,4 gr. (porosity - 98%, density - 0,4 gr/cm3) - was placed into a hermetic container made of steel, a part of the porous material connected with the pipe structure was covered with high degree of permeability for hydrogen - alloy of palladium and silver. There was a pressure of 700 atm. created inside the pipe structure and the layer was heated up to 250°C. The weight of the container increased to 170 milligrams. This corresponded to the weight ratio of 7,1 %. It took 10-15 minutes to fill it with hydrogen.

### Example 3.

Bunches of capillaries (1000 pieces), total length of 100m., the outer diameter 110 mk., the inner diameter 100 mk. were coupled - stuck together with glue. The bottom ends of the capillaries were sealed. The outer surfaces (lateral and bottom) of the structure were covered with metal that has a low degree of permeability for hydrogen - copper 10 mk. thick. The upper part of the structure was left open and connected to the pipes for supplying and extracting hydrogen. The capillary structure and pipes were placed into a hermetic container, open ends of the capillaries were covered by granules of the Wood alloy and a heater was put on them. The capillaries were filled with hydrogen, achieving pressure 700 atm. Then the heater was turned on and the temperature of the Wood alloy made equal to 80°C. The alloy melted and sealed the ends of capillaries and space between them hermetically. The heater was turned off, the alloy cooled down rapidly, the pressure in the pipes decreased. The initial weight of capillaries was 453 milligrams and after filling with hydrogen - 507,5 milligrams. The weight ratio appears to be 12%. It took 10-15 minutes to fill it with hydrogen. Industrial applicability As it was proved the container for storage of hydrogen corresponds to strict requirements of safty applied to refilling and storage of hydrogen - the casing of the device is free of high pressure, the possibility of breaking the hermetic sealing and escaping of hydrogen is minimized, the process of refilling is carried out under lower temperatures, the weight ratio of hydrogen in the container is more than, 6%. All these factors make viable the application of the described invention in chemical industry, transport mechanical engineering and other industries.

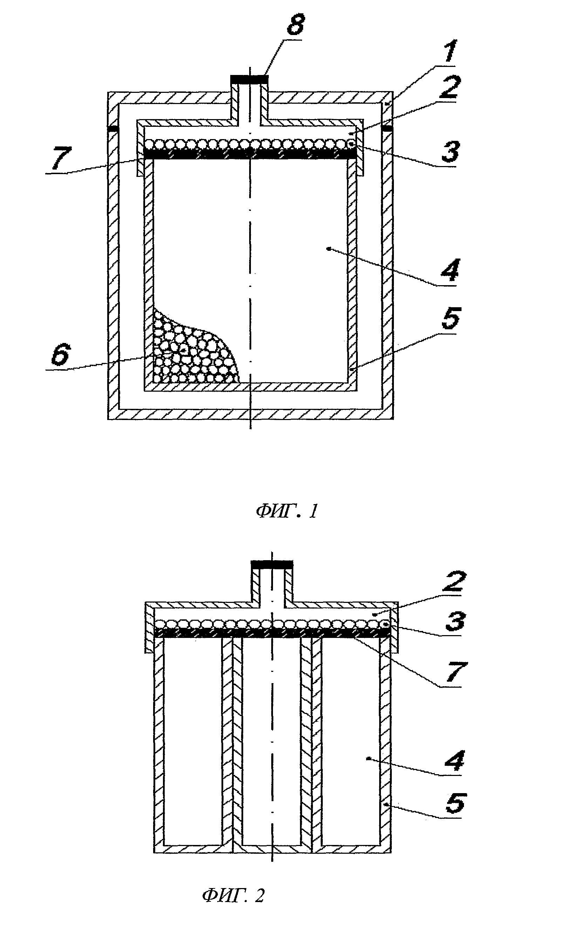

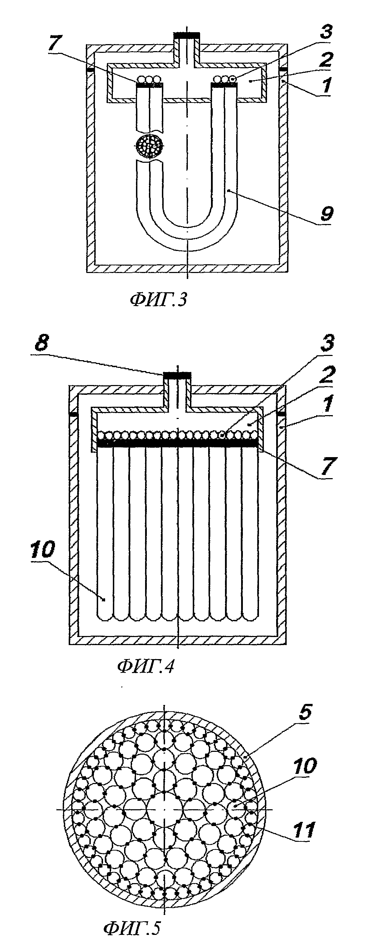

## Claims

1. The container for storage of hydrogen consists of hermetic casing, technological branch pipes, heating and refilling-accumulating elements, placed in the casing, so that the refilling-accumulating element is made of porous material and a part of its outer surface, that is connected by pipes for supplying and extracting the hydrogen, is covered by a material with a high degree of permeability for hydrogen, or with low temperature of fusion, or with low temperature of destruction, and the rest of the outer surface is covered by a material with a low degree of permeability for hydrogen and heating element is placed on the same level with that.

2. The specific particularity of the container mentioned in Claim 1, **characterized in that** the layer of the material with high degree of permeability for hydrogen is made of palladium or nickel alloys or polymer materials.

3. The specific particularity of the container mentioned in Claim 1, **characterized in that** the layer with a low temperature of fusion is made of the Wood alloy, or the Devard alloy, or bismuth alloy, tin alloy, lead alloy, or polymer materials.

4. The specific particularity of the container mentioned in Claim 1, **characterized in that** the layer with a low temperature of destruction is made of polymer materials or organometallic materials.

5. The specific particularity of the container mentioned in Claim 1, **characterized in that** the porous material is the foamed nickel, or the foamed aluminum, or the foamed polymer material, or the foamed silicate.

6. The specific particularity of the container mentioned in Claim 1, **characterized in that** the porous material is constructed of nanopipes.

7. The specific particularity of the container mentioned in Claim 1, **characterized in that** the layer with a low degree of permeability for hydrogen can be made of such metals as steel or copper, or their alloys, or ceramics, or glass.

8. The specific particularity of the container mentioned in Claim 1, **characterized in that** the refilling-accumulating element is made of separate hermetic sections, that are individually connected to respective heating elements.

9. The specific particularity of the container for the storage of hydrogen, that consists of hermetic casing, technological branch pipes, heating and refilling-accumulating elements, placed in the casing, is that the refilling-accumulating element of hydrogen is constructed in the form of a bunch of hollow capillaries with its ends sealed with a material with a high degree of permeability for hydrogen, or with low temperature of fusion, or with low temperature of destruction, so that the ends of that capillaries are connected with pipes for supplying and extracting the hydrogen, and the heating element is placed on the same level with this layer.

10. The specific particularity of the container mentioned in Claim 9, **characterized in that** the layer with high degree of permeability for hydrogen, or with a low temperature of fusion, or with low temperature of destruction is placed on one end of the bunch and another end is hermetically sealed.

11. The specific particularity of the container mentioned in Claim 9, **characterized in that** the layer with high degree of permeability for hydrogen is made of palladium or nickel

12. The specific particularity of the container mentioned in Claim 9, **characterized in that** the layer with low temperature of fusion is made of the Wood alloy, or the Devard alloy, or bismuth alloy, tin alloy, lead alloy, or polymer materials.

13. The specific particularity of the container mentioned in Claim 9, **characterized in that** the layer with low temperature of destruction is made of polymer materials or organometallic materials.

14. The specific particularity of the container mentioned in Claim 9, **characterized in that** the capillaries are made of glass, or carbon, or metal, or polymer materials.

15. The specific particularity of the container mentioned in Claim 9, **characterized in that** refilling-accumulating element of hydrogen is made in the form of a bunch of capillaries or a single capillary winded on the core element.

16. The specific particularity of the container mentioned in Claim 9, **characterized in that** the outer surface of the bunch of capillaries or the single capillary made of glass, or carbon, or polymer materials, is covered by a metal with a low degree of permeability for hydrogen.

17. The specific particularity of the container mentioned in Claim 9, **characterized in that** the refilling-accumulating element of hydrogen is made of capillaries of different diameter and the diameter of the external capillaries is less than that of the internal ones.

18. The specific particularity of the container mentioned in Claim 9, **characterized in that** the capillaries are inter-connected.

19. The specific particularity of the container mentioned in Claim 9, **characterized in that** the refilling-accumulating element of hydrogen is made of separate hermetic sections, that are individually connected to respective heating elements.
